# EUROPEAN PATENT APPLICATION

(11) **EP 2 816 516 A1**
(43) Date of publication of application: **24.12.2014**
(21) Application number: 14162882.6
(22) Date of filing: 31.03.2014
(51) Int. Cl.: G06Q 20/20, G07G 1/00, G07G 1/14

(54) **Universal sales data processing device**

(30) Priority: 19.06.2013 MY PI20132290
(71) Applicant: MY E.G. Services Berhad, 47800 Petaling Jaya, Selangor (MY)
(72) Inventor: Chan, Jason Ling Khee, Selangor (MY)
(74) Representative: Treeby, Philip David William

(57) **Abstract**

A device capable of receiving, parsing, storing and sending sales data from multiple sales terminal devices (2), or more commonly known as point of sale terminals, electronic cash registers (ECRs), computers having POS software and other types of electronic transaction data to a remote server. The device further contains a redundancy or backup unit (8) which continues to receive sales or transaction data from the connected sales terminal devices (2) when the device itself is non-operational.

## Description

### TECHNICAL FIELD

The present invention generally relates to data processing systems and the methods of their use. The invention particularly relates to a stand-alone sales data processing device.

### BACKGROUND ART

Point-of-sale (POS) systems and electronic cash registers (ECR) are found in retail shops, convenience stores and supermarkets; aside from performing the basic task of a calculator to add up the total purchase made by every visiting customer, they also serve to register all the sales transactions made by those customers. As sales transactions become more and more complex with the increased use of bank cards, charge cards and credit cards, with some merchants charging service taxes, government taxes, or both, while others may periodically apply special discounts for certain products when they are looking to clear off their inventories, these point-of-sale systems and electronic cash registers are slowly becoming more and more complex.

Older, point-of-sale systems or electronic cash registers may run on a simple, 4-bit pre-programmed processor, but as the merchants demanded more and more functions from these machines, these previously dedicated devices are being forced to upgrade to the point where they either start running complex operating systems, or are completely replaced by a general purpose computer running a point-of-sale software. A general purpose computer is able to better handle the different types of transactions with their faster processors and larger data handling capabilities. Moreover, they are able to receive periodical upgrades and undergo various software and hardware customizations.

However, as these point-of-sale (POS) systems and electronic cash registers (ECR) become more and more complex, they also start to diversify from each other, greatly. Manufacturers of POS systems and ECRs such as Canon, Quorion, Sharp, Towa and Panasonic have started rolling out their first systems long before sales transactions are being handled and processed the way they are today. With different design philosophies and approaches, it was only logical that all of their current, most advanced POS systems and ECRs run on very different platforms.

Most popular POS system and ECR vendors are using Windows CE and Linux based OS for their devices, but almost all of them use different ways of programming to store and exchange sales data recorded by their machines. Also, there are still a large numbers of merchants who do not require such a complex POS system or ECR to record their transactions, and all of this will start to present a problem when a chain of stores are being owned and managed by a single, larger business entity. In order to keep track of the performance of each outlet, the managing business entity would have to find a way to collect all the different types of data generated by the different types of POS systems and ECRs. The cost of making all the merchants upgrade or change to the same type of POS system or ECR can be prohibitively high, and there are certain stores which, due to their sizes and locations, essentially do not carry a big enough inventory and/or make a high enough turnover to warrant the use of a complex POS system or ECR.

Moreover, tax collection agencies responsible for monitoring sales transactions will have difficulty bringing all the sales data from all the different types of POS systems and ECR together, as the data from all the different machines and platforms are simply not compatible with other.

### SUMMARY OF INVENTION

As such, it is desirable to have a device that is able to accept, understand and process sales data or information from different types of point-of-sales (POS) systems or electronic cash registers (ECR), so that a single type of formatted data is then sent to a remote, primary server for easier display, further processing and permanent storage. The device shall make it possible for the different types of POS systems and ECRs to continue running on their different platforms and software, while working together harmoniously as a collective.

According to one aspect of the invention, there is provided a universal sales data processing device, comprising:
an input terminal adapted to be connected to and receive sales data simultaneously from multiple sales terminal devices;
a processor for identifying, queuing and selecting the received sales data in a cyclic manner and parsing the data into a predetermined, standardized format;
a memory module for storing the parsed data; and
an output module for periodically transmitting the stored data to a remote server.

The invention introduces a novel universal sales data processing device that is able to collect sales data from different types of sales terminal devices (POS systems, ECRs and computers running POS software), and convert them into a single data format for temporary storage, and then output the data to a remote server for display, further processing and permanent storage.

In an embodiment, the processor is adapted to identify the sales data received over a fire-and-forget messaging protocol.

The fire-and-forget messaging protocol allows the different types of connected sales terminal devices (POS systems and ECRs) to send their data to the sales data processing device, without having to receive an "acknowledged" signal from the device.

In another embodiment, the sales data is in the ASCII or plain text format.

The POS systems and ECRs are further configured to output their sales data in the ASCII or plain text format only.

In one embodiment, each of the sales terminal devices comprises an Electronic Cash Register (ECR), a point-of-sale terminal (POS) or a computer running a point-of-sale software.

The Electronic Cash Register (ECR) and point-of-sale (POS) terminal or system, may be dedicated or advanced machines running on different types of operating systems and platforms. The computer shall be a generic computer running on any given operating system, such as Windows, Mac OS, or Linux with a point-of-sale (POS) software.

In another embodiment of the present invention, the multiple sales terminal devices comprise devices of the same type.

In yet another embodiment of the present invention, the multiple sales terminal devices comprise devices of different type.

According to one preferred feature, the input terminal is a serial data port.

Serial data ports, such as the RS232, 485 and 422 Serial COM Ports are very common among different types of POS systems and ECRs. As the data output rate of a typical POS system or ECR does not go beyond 9600 bits per second (bps), Serial COM ports are a cost effective solution for POS systems and ECRs for sending and receiving sales transaction data.

In one embodiment, the output module is a wireless cellular modem.

This option provides the invention the ability to transmit the collected data over the air to a remote server. Otherwise, the output module may comprise a physical connector (such as a LAN connector) to connect to a remote server through a RJ-45 Ethernet cable.

In another embodiment, the device further comprises a data backup module.

A data backup module operates concurrently with the universal sales data processing device, and saves the sales data received by the universal sales data processing device.

According to one preferred feature, the data back module comprises
a power module independent from the universal sales data processing device for supplying power to the backup module when the universal sales data processing device is non-operational;
a second input terminal to receive sales data from the sales terminal devices connected to the universal sales data processing device; and
a second memory module for storing the sales data.

The data backup module runs on a separate independent power source so therefore will not be affected in the event of a power outage; the backup module would continue to receive data from any active sales terminal devices.

In one preferred feature, the secondary memory module stores the sales data in the XML format.

As the backup module lacks a processor found in the sales data processing device, the received sales data is being stored "as-is" in the memory until the data can be physically retrieved from the processing device.

In another aspect, there is provided a method for receiving, processing and outputting sales data from multiple sales terminal devices that are connected to a single input terminal, the method comprising
running multiple instances of a data retrieval program to simultaneously identify and receive sales data from the individually connected sales terminal devices;
receiving said sales data at a local processing device by employing a queuing system to select data from the connected sales terminal devices in a cyclic manner;
parsing the selected sales data into a predetermined, standardized format;
storing the parsed data in a first memory module, and
outputting the stored data periodically to a remote server.

The invention further introduces a novel method of collecting sales data from multiple sales terminal devices (POS systems and ECRs), through the use of a single connection. The sales data processor runs multiple instances of a data retrieval program to listen to and pick up sales or transaction data from every connected sales terminal devices, and then queue the collected data for parsing. It then proceeds to store the parsed data in a first memory module. An output module periodically sends the stored sales or transaction data to a remote server.

In another aspect, the method further comprises receiving data from the sales terminal devices by employing a fire-and-forget messaging protocol.

The fire-and-forget messaging protocol allows the different types of connected sales terminal devices (POS systems and ECRs) to send their data to the sales data processing device, without having to receive an "acknowledged" signal from the device.

In yet another aspect, there is provided a method for receiving, processing and transmitting sales data, the method further comprising backup up of the sales data by
receiving the sales data from the multiple sales terminal devices, and
storing the sales data in a second memory module.

The backup module receives the same data from the connected sales terminal devices (POS systems, ECRs, and computers running POS software) as the sales data processing device, and stores the collected data in a second memory module as a backup, in the event the sales data processing shuts down due to power outage, etc.

According to one feature, the second memory module stores the sales data in the XML format.

As the backup module lacks a processor found in the sales data processing device, the received sales data is being stored "as-is" in the memory until the data can be physically retrieved from the processing device.

### BRIEF DESCRIPTION OF THE DRAWINGS

The invention is illustrated, but not limited, by the following description of preferred embodiments, that is given by way of example only with reference to the accompanying drawings, in which:
Figure 1 is a general layout view of sales terminal devices, i.e. point-of-sale (POS) systems, electronic cash registers, computers with POS software connected to a universal sales data processing device according to an embodiment of the present invention.
Figure 2 illustrates how the sales data or sales transaction data is collected from different sales terminal devices, parsed and then stored in a memory module.
Figure 3 illustrates a pair of serial port connectors, one male and female. A typical sales terminal device comes with at least one of either of these connectors, if not both, and the universal sales data processing device according to an embodiment of the present invention, can connect to both types of connectors.
Figure 4 shows the housing of a universal sales data processing device according to an embodiment of the present invention.
Figure 5 shows the operation of the redundancy unit, or backup unit of the sales data processing device according to an embodiment of the present invention.
Figure 6 illustrates the flow of the signals from a sales terminal device to the universal sales data processing device, according to an embodiment of the present invention.
Figure 7 shows how the universal sales data processing device checks with a remote maintenance server to determine if it is using the latest software to accommodate the latest sales terminal devices or POS software, according to an embodiment of the present invention.
Figure 8 further illustrates how a user is able to log onto the maintenance server to obtain useful, quantifiable data according to an embodiment of the present invention.

### DETAILED DESCRIPTION

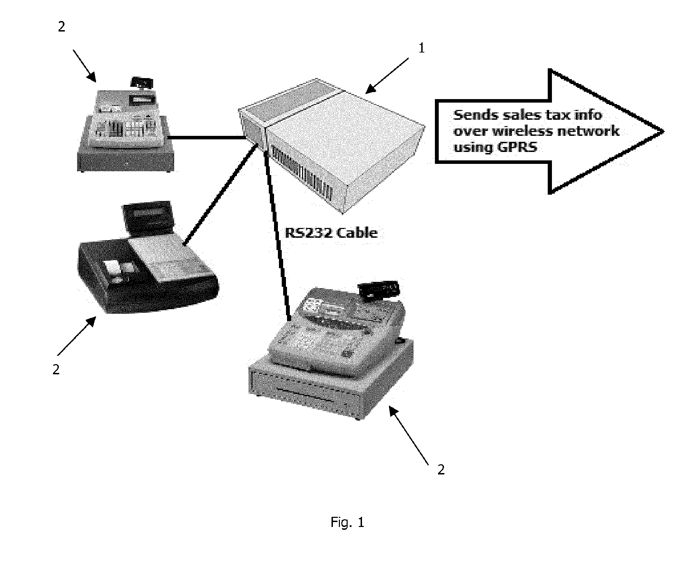

A universal sales data processing device 1, in an embodiment of the present invention, and according to Figure 1, is encased in an acrylic based housing 7. This type of housing 7 is popular amongst modem designers for its low signal impedance, and therefore does not interfere significantly with cellular signals. As an embodiment of the present invention suggests the use of a cellular based output terminal, it is crucial that the design of the housing supports broadcasting and reception of cellular signals.

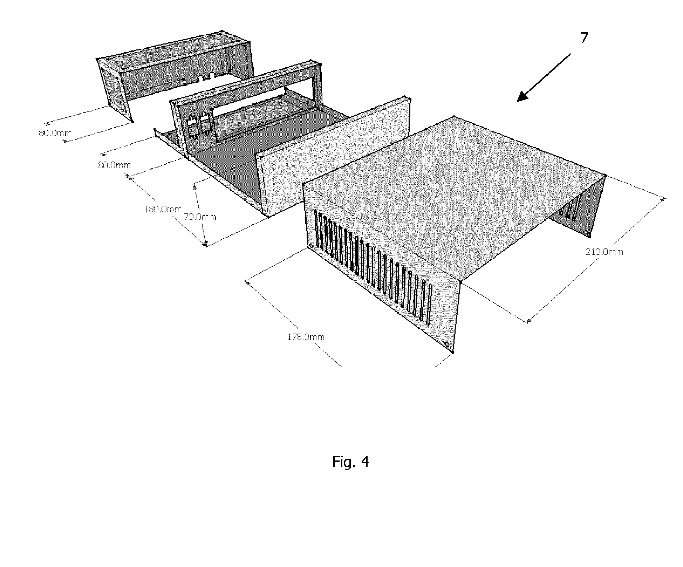

A more detailed view of the housing 7 is shown in Figure 4. It is to be noted that the housing is designed such that it allows a cellular USB modem to be completely installed within the housing itself. The housing 7 further comes with a power and serial cable locking system to present signals going into the universal sales data processing device from being tampered with or hijacked.

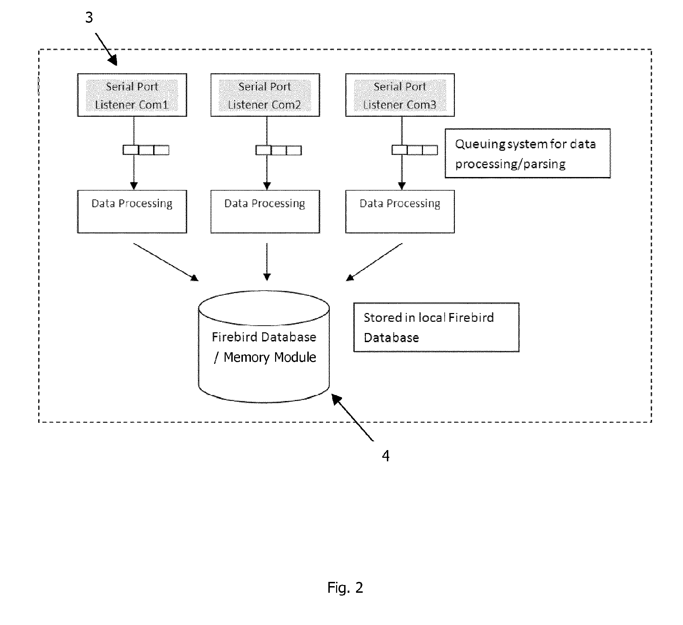

The universal sales data processing device 1 according to an embodiment of the present invention runs on Windows XP. The Windows operating system is embedded with the .net framework. The device does not require booting up, rather, upon receiving power, the operating system loads into the device's RAM (not shown), and the universal sales data processing begins polling data from all connected sales terminal devices 2, according to Figure 2.

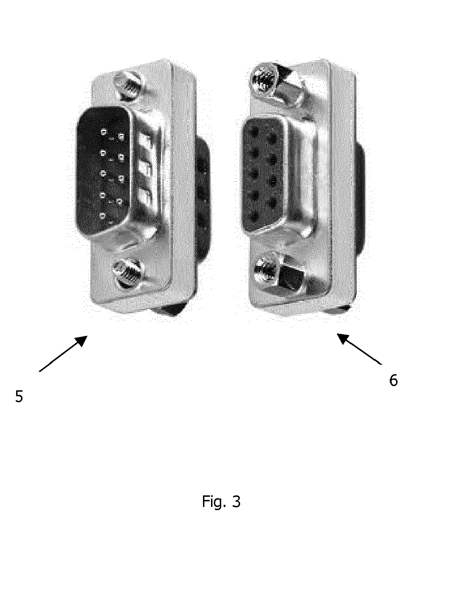

As mentioned in earlier sections, serial ports 5 and 6, as shown in Figure 3, such as the RS232, RS485 and RS422, DB9 are very popular among sales terminal device (POS systems, ECRs and computers running on POS software) manufacturers in that at least one of them will be found present on each terminal. The universal sales data processing device is thus designed with this fact in mind, so that these sales terminal devices 2 can be easily connected to it, without the use of adaptors.

The sales terminal devices 2 may be of different types and / or from different manufacturers, but in order for them to send useful data to the universal sales data processing device 1, they must first be configured to output their data in the ASCII or plaintext format. Furthermore, they are to be configured to broadcast their data using the fire-and-forget messaging protocol (no handshaking), this is because the universal sales data processing device 1 employs the fire-and-forget messaging protocol to simplify interfacing with many different types of sales terminal devices 2.

A serial port listener application / or program, which conforms to Microsoft's .net frame version 2.0. is loaded into the device's RAM, and the universal sales data processing device 1 is able to load up to 16 instances of the listener application to "wait" for sales data from up to 16 individual sales terminal devices 2. The listener application is programmed to pick up data transmitted to the universal sales data processing at any baud rate.

It is to be noted that each serial port 3 on the universal sales data processing device is able to listen to more than one sales terminal device 2, as mentioned on the previous page, and a processor (not shown) residing within the universal sales data processing device 1 employs a queuing system to ensure that all the incoming data is processed correctly. The processor parses each transaction data into a predetermined, standardized format, and then stores the data in a memory module 4, as shown in Figure 2. The present embodiment uses a firebird database as a memory module 4 for storage purposes.

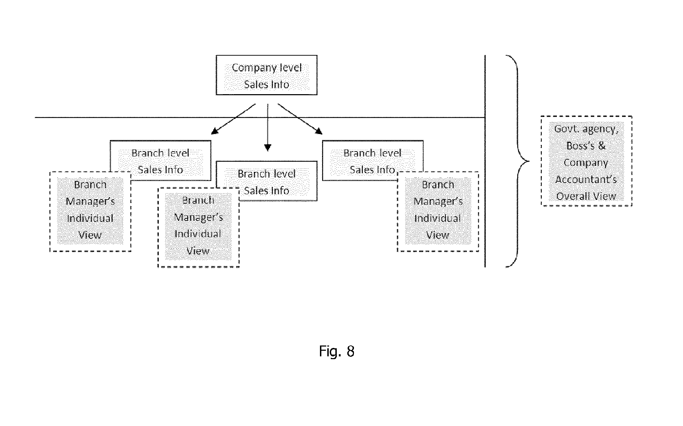

Under the present embodiment, the output terminal comprises a detachable cellular modem, where the universal sales data processing periodically broadcasts a series of collected sales data to a remote server. This remote server may be an independently run server, or one that is completely controlled and monitored by the owner of the sales terminal devices so that the owner may monitor any kind of business transactions occurring at each sales terminal device 2, as shown in Figure 8. Figure 8 illustrates how it is possible for someone, after logging in into the remote server, to access different types of quantifiable data collected by the server to let them analyze and assess the transactions of each sales terminal device 2, or a group of sales terminal device 2 within a shop, or an outlet. Different users would be given different levels of clearance to view the different types of sales data stored in the remote server.

Presently, a functional universal sales data processing device comprises
1) An Intel Atom N270 (1.6 Ghz) fanless processor,
2) A 1 GB DDR2 533 Mhz DDRRAM,
3) An 8 GB Compact Flash Card,
4) 1 x PCI terminal, 1 x PCI-E terminal, 1 x Mini PCI-E terminal,
5) +12V/19 V DC-In terminal,
6) Intel 945GSE ICH7M Chipset main board
7) Intel 945GSE (GMA950) Integrated Graphics Media Accelerator,
8) LVDS Dual Channel via 2x DF13 Sockets,
9) Intel ICH7M with built-in 10/100 BT Mac+Intel 82562ET PHY LAN module,
10) ALC662 Audio Controller for sounds,
11) Winbond W83627EHG Chipset, Fintek 8121DG 1 x IDE, 1 x KB, 1 x Mouse, 4 x COM, 2 x Sata, 1 x CD Socket,
12) 1 x RS232/422/485 and 3 x RS232 Com ports,
13) Support for 8 USB Port, 4 in / 4 out Digital I/O,
14) Watchdog Timer, which generates system reset at 256 levels,
15) Built-in W83627EHG System / CPU temperature and voltage monitoring.

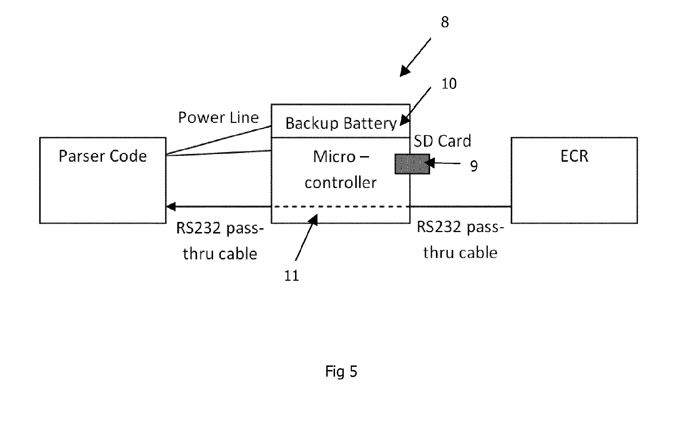

Furthermore, there is also a redundancy unit 8, or backup unit, as shown in Figure 5, which is optionally added into the device for backup. The redundancy unit 8, or backup unit has its own microcontroller 11, separate power source, such as a rechargeable battery 10 which is charged whenever there is power supply. A smart algorithm is employed to make sure the battery 10 stays fully charged without deteriorating its power storage capacity too quickly. A separate data cable from the main serial cable coming from the sales terminal devices 2 is also connected to the redundancy unit 8.

The redundancy unit 8 stores all incoming data received by the universal sales data processing device 1, regardless of whether the universal sales data processing device 1 is powered on or off. If there is a power failure, the rechargeable battery 10 takes over the power supply for the redundancy unit 8, so that the redundancy unit may continue to receive sales data from all the connected sales terminal devices 2.

The backup data is stored in the XML format in a portable, second memory module, and in the present embodiment, the preferred second memory module 9 is a Secure Digital (SD) Card. The memory module is stored and locked within the redundancy unit 8 and can only be extracted by special keys designed to access the universal sales data processing device 1.

It is of course to be noted that the redundancy unit is small enough to be housed within the housing 7 of the universal sales data processing device 1. The rechargeable battery in the present embodiment is sized to supply up to at least 1500 mAh of power for 100 hours of DC operation, based on the micro-controller's power consumption of 15 mA per hour.

Once power supply resumes, the universal sales data unit will restart, extract the stored data from the second memory module 9 (Secure Digital Card) and parse the contents from the missing days.

Under an embodiment of the present invention, the universal sales data processing device 1 is connected to the sales terminal devices 2 using serial ports (RS232, 485, 422, DB9).

The following Serial COM settings are required in order for the universal sales data processing device 1 to successfully receive data from the sales terminal device 2.

### Serial COM Settings

| | |
|---|---|
| a) Interface | : Serial port (e.g. RS232, 485,422...) |
| b) Line configuration | : Direct connection |
| c) Data rate | : 9600bps |
| d) Synchronizing mode | : None |
| e) Handshaking | : ECR fires and forgets, no handshaking |
| f) Checking | : 1 Start bit, 8 Data bits, No parity bit, 1 Stop bit |
| g) Code | : ASCII |
| h) Bit sequence | : LSB first |

### Cable signal connection chart (ECR DB9 Connector)

| | |
|---|---|
| (not used) | : 1 |
| RD | : 2 <------- |
| SD | : 3 -------> |
| (not used) | : 4 |
| SG | : 5 ------- |
| (not used) | : 6 |
| (not used) | : 7 |
| (not used) | : 8 |
| (not used) | : 9 |

*RD : RECEIVED DA TA*
*SD : TRANSMITTED DATA*
*SG : SIGNAL GROUND*

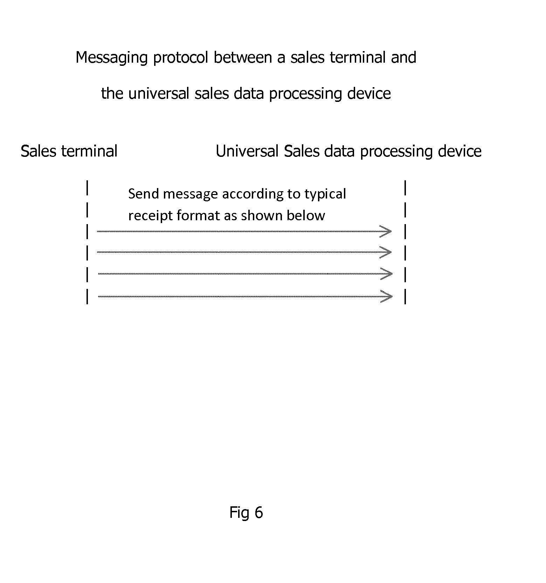

Under an embodiment of the present invention, a fire-and-forget messaging protocol is used for the sales terminal device 2 to send data to the universal sales data processing device 1. This is illustrated in Figure 6.

The sales terminal device 2 must be pre-configured to not expect any response from the sales data processing device. The following is a typical receipt (format) from a sales terminal device.
Field1 = ECR Mode (REG/VOID/...etc)
Field2 = DateTime (YYYYMMDDhhmm)
Field3 = Receipt No.
Field4 = Sales Items
Field5 = Subtotal Amount
Field6 = Service Tax Amount
Field7 = Service Charge Amount
Field8 = Total Sales Amount

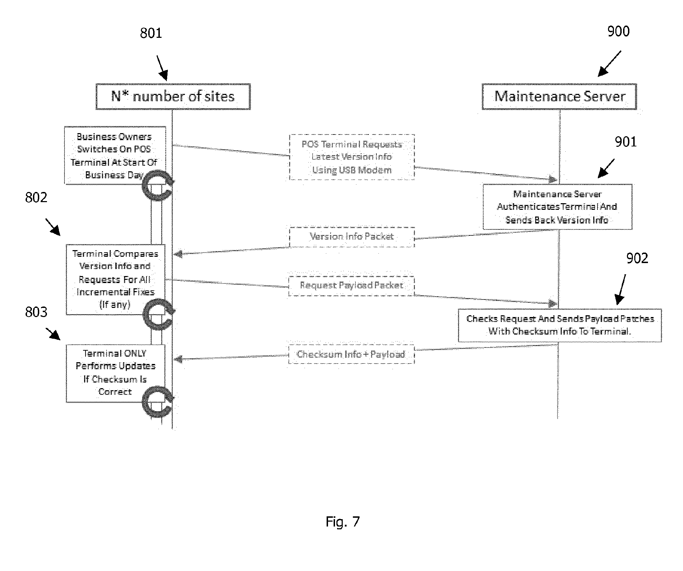

The universal sales data processing device 1 is further supported by a maintenance server 900 for diagnostic and programming update purposes. As shown in Figure 7, when the device is turned on during the beginning of a business day, the connected sales terminal device 2 is programmed to search 801 for any program updates for the sales data processing device's software at the maintenance server 900.

The maintenance server 900 first authenticates 901 that the sales terminal device 2 is indeed a valid sales terminal device 2, and then sends the current program version information back to the sales terminal device 2. The sales terminal device 2 then compares 802 the version information of the universal sales data processing device 1 against the information received from the maintenance server 900, and then requests for the program update if necessary.

The maintenance server, once receives the request, sends 902 the update file along with a digital verifier back to the sales terminal device 2.

The sales terminal device 2 checks 803 that the received update file is intact, before loading the file into the universal sales data processing device for update.

Therefore, it is obvious from that the above description that the present invention, a universal sales data processing device, is able to consolidate sales data from multiple types of sales terminal devices, be they point-of-sale (POS) systems, electronic cash registers (ECRs), computers running POS software, or any kind of electronic transaction registration device capable of outputting the transaction data in the ASCII or plain text format.

Although the above description has focused mainly on a particular embodiment of the invention whereby the universal sales data processing device uses only serial port connections for the input terminal, and cellular modem for output module, due to the flexibility of the architecture of the universal sales data device, it is possible to employ other means of inputs terminals, such as USB, etc, and that the output module may be connected via a hard line to the external server.

It is understood that the invention may be embodied in numerous other ways without departing from the scope of the invention.

## Claims

1. A universal sales data processing device comprising:
an input terminal adapted to be connected to and receive sales data simultaneously from multiple sales terminal devices (2);
a processor for identifying, queuing and selecting the received sales data in a cyclic manner and parsing the data into a predetermined, standardized format;
a memory module (4) for storing the parsed data; and
an output module for periodically transmitting the stored data to a remote server.

2. A universal sales data processing device according to claim 1, wherein the processor is adapted to identify the sales data received over a fire-and-forget messaging protocol .

3. A universal sales data processing device according to claim 1 or 2, wherein the sales data is in the ASCII format or plain text format.

4. A universal sales data processing device according to any one of claims 1 to 3, wherein each of said sales terminal devices (2) comprises an Electronic Cash Register (ECR), a Point of Sale terminal (POS) or a computer running a point-of-sale software.

5. A universal sales data processing device according to claim 4, wherein said multiple sales terminal devices (2) comprise devices of the same type.

6. A universal sales data processing device according to claim 4, wherein said multiple sales terminal devices (2) comprise devices of different type.

7. A universal sales data processing device according to any one of the preceding claims, wherein the input terminal is a serial data port.

8. A universal sales data processing device according to any one of the preceding claims, wherein the output module is a wireless cellular modem.

9. A universal sales data processing device according to any one of the preceding claims, the device further comprising a data backup module (8).

10. A universal sales data processing device according to claim 9, wherein the data backup module (8) comprises
a power module (10) independent from the universal sales data processing device for supplying power to the backup module (8) when the universal sales data processing device is non-operational;
a second input terminal to receive sales data from the sales terminal devices connected to the universal sales data processing device; and
a second memory module (9) for storing the sales data.

11. A universal sales data processing device according to claim 10, wherein the second memory module (9) stores the sales data in the XML format.

12. A method for receiving, processing and transmitting sales data from multiple sales terminal devices (2) that are connected to a single input terminal, the method comprising
running multiple instances of a data retrieval program to simultaneously identify and receive sales data from the individually connected sales terminal devices (2);
receiving said sales data at a local processing device by employing a queuing system to select data from the connected sales terminal devices in a cyclic manner;
parsing the selected sales data into a predetermined, standardized format; storing the parsed data in a first memory module (4), and
outputting the stored data periodically to a remote server.

13. A method for receiving, processing and outputting sales data according to claim 12, further comprising
receiving data from the sales terminal devices (2) by employing a fire-and-forget messaging protocol.

14. A method for receiving, processing and transmitting sales data according to claim 12 or claim 13, further comprising backing up of the sales data by
receiving the sales data from the multiple sales terminal devices (2),
storing the sales data in a second memory module.

15. A universal sales data processing device according to claim 14, wherein the second memory module (9) stores the sales data in the XML format.
